# EUROPEAN PATENT SPECIFICATION

(11) **EP 0 399 449 B1**
(45) Date of publication and mention of the grant of the patent: **12.10.1994**
(21) Application number: 90109668.5
(22) Date of filing: 22.05.1990
(51) Int. Cl.: B60H 1/32, B60P 3/20

(54) **A refrigerated transportation unit for foodstuff and the like perishable commodities**
Gekühltes Transportabteil für Lebensmittel und ähnlich verderbliche Artikel
Compartiment de transport réfrigéré pour denrées alimentaires et autres denrées périssables

(30) Priority: 23.05.1989 IT 2060689
(43) Date of publication of application: 28.11.1990
(73) Proprietor: SEA CONTAINERS ITALIA S.r.l., I-Milan (IT)
(72) Inventor: Ghiraldi, Alberto, I-21038 Reno di Leggiuno- Varese (IT)
(74) Representative: Faraggiana, Vittorio, Dr. Ing.

(56) References cited:
- WO-A-84/04378
- BE-A- 639 288
- US-A- 4 302 944
- US-A- 4 916 916
- SOVIET INVENTIONS ILLUSTRATED, section P/Q, class Q13, 23 May 1986 no. 87-020048/03, SU 1232-511-A

## Description

This invention relates to a refrigerated transportation unit for foodstuffs and the like perishable commodities, being of a type which comprises a box-like body wherein such commodities are loaded.

As is known, for transporting foodstuffs on road trucks, trailers, freight cars, containers and the like means of transportation, it is necessary, if deterioration of the foodstuffs in transit is to be prevented, that the temperature and relative humidity on the interiors of the transportation compartment be kept at constant levels strictly related to the kind of the commodities being carried. In fact, the optimum ambient temperature for preservation of fresh fruit and vegetable produce would obviously be quite a different one from that required to preserve meat or deep-frozen products.

It is current practice to have foodstuff transportation units equipped with electrically or diesel engine operated refrigerating systems which, while affording good control on temperature, usually tend to be unsatisfactory where fresh fruit and vegetable produce are concerned which must be kept at temperatures close to freezing point, especially on account of the high rate of dehumidification that they induce within the refrigerated compartment causing the produce to wither. It should be further noted that the investment, maintenance, and running costs of transportation units equipped with refrigerating machinery are considerably high.

Also known and widely used are cool transportation units equipped with water or dry ice reservoirs, which while being simplified constructions, can afford no control on temperature and are, therefore, unsuited to transportation of varying kinds of foodstuffs. In addition, such transportation units would afford no preservation of deep-frozen products in general.

These prior cool transportation units have, moreover, the disadvantage that their operating range is limited by the need to make frequent stops to re-plenish their ice reservoirs, and that they do not provide for prompt lowering of their temperature where foodstuffs must be loaded at ambient temperature, for example.

The problem that underlies this invention is to provide a refrigerated transportation unit of the type specified above, which has such constructional and functional features as to overcome the shortcomings with which the prior art is beset.

From the prior patent US-A-4 302 944 (corresponding to the preamble of claim 1) a local delivery truck is known, having an interior space to be cooled and a separate cold accumulator. The cold accumulator is a storage container which contains in its lower part a high density, low viscosity first fluid and in its upper part a second fluid comprising an anti-freeze solution of lower density than the first fluid and essentially immiscible therein. The first fluid is circulated to the interior space to be cooled to pick up heat therefrom; the warmed first fluid is then returned and sprayed onto the surface of the second fluid, which has been chilled during non-operative condition of the truck and contains ice slush, so that the first fluid will be chilled by said ice slush in percolating downwardly therethrough.

According to the invention, there is provided a refrigerated transportation unit for foodstuffs and the like perishable commodities, comprising a box-like body wherein such commodities are loaded, a cold accumulator installed on the body, characterized in that it comprises a hydraulic circuit extending partway through the cold accumulator and wherethrough a thermal transfer fluid is flown in thermal transfer relationship with the cold accumulator, said hydraulic circuit including a motive means for circulating the fluid, a delivery conduit and a return conduit extending across said body, fluid mixing and re-circulating means in the delivery conduit, and a plurality of heat exchangers supported within said body in communication with the delivery and return conduits for refrigerating the inside of the body, the cold accumulator comprises box-type containing means enclosed in the wall structure of said body and containing a low freezing point aqueous solution in which there are submerged thermal exchange conduit nests of the hydraulic circuit.

The features and advantages of a refrigerated transportation unit according to the invention will become apparent from the following detailed description of a preferred embodiment thereof, given by way of illustration and not of limitation with reference to the accompanying drawings.

In the drawings:

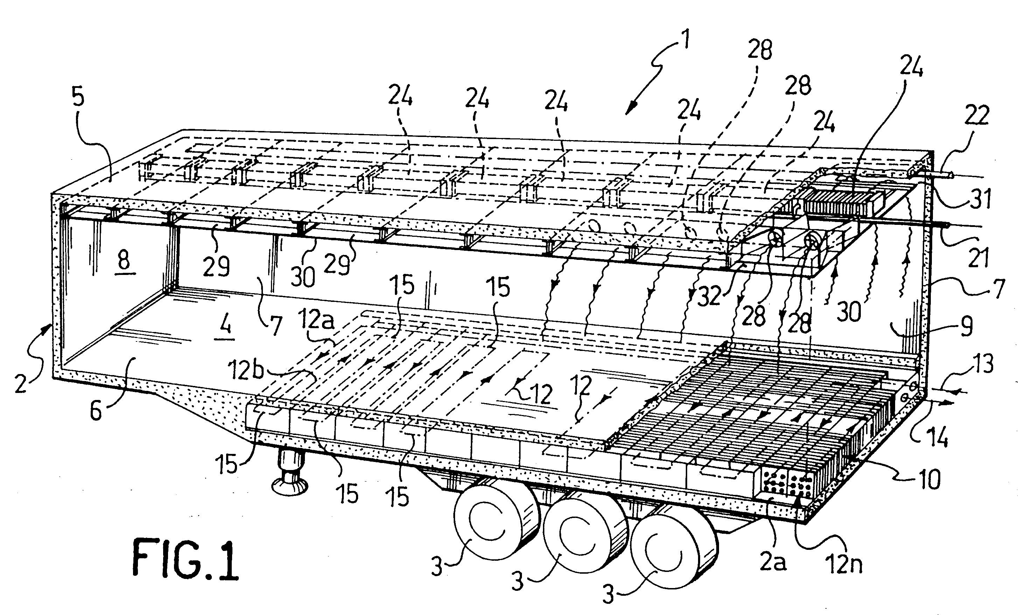

Figure 1 is a perspective view showing schematically in cross-section a refrigerated transportation unit according to this invention;

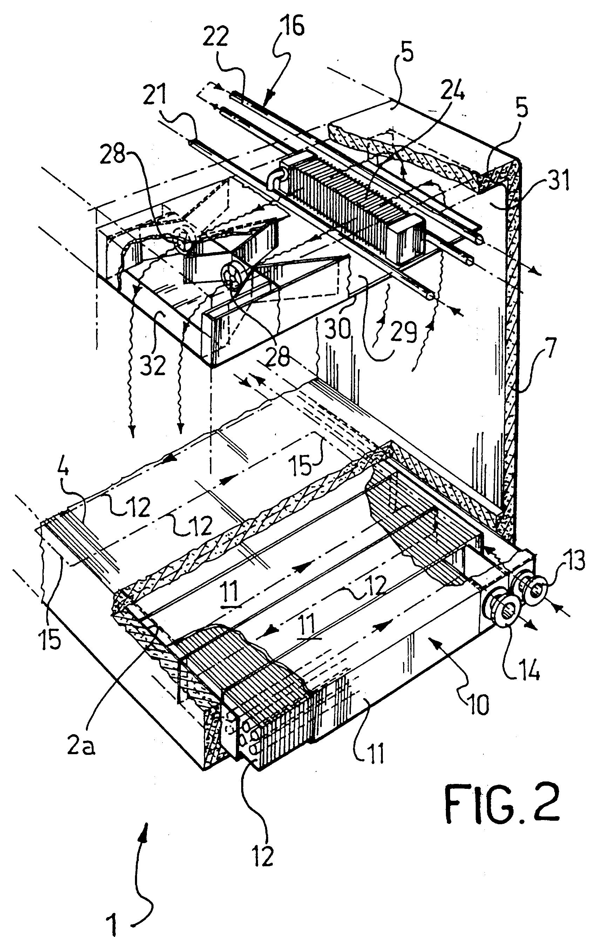

Figure 2 is a perspective view, drawn to an enlarged scale, showing schematically a detail of Figure 1; and
Figure 3 is a diagramatic representation of a hydraulic circuit provided on the refrigerated transportation unit of Figure 1.

With reference to the drawing views, generally indicated at 1 is a refrigerated transportation unit for foodstuffs and the like perishable commodities, not shown. In the exemplary form under consideration, the transportation unit 1 is a semi-trailer having a box-like body 2 mounted on wheels 3.

Within the box-like body there are defined a floor 4, a roof 5, two juxtaposed side walls 6 and 7, a front wall 8, and a rear wall 9 provided with a pair of conventional doors, not shown.

The refrigerated transportation unit 1 includes a cold accumulator, generally shown at 10, which is installed on the body 2 within a thermally insulated compartment 2a provided beneath the floor 4.

The accumulator 10 comprises a plurality of containers 11 of box-type construction which are laid side-by-side and contain an aqueous ternary or quaternary solution, such as brine, having its freezing point at approximately -26°C.

Inside each box-type container 11 there extends a respective finned tube nest 12 which is fully submerged under said aqueous solution, and hence in heat transfer relationship therewith.

Indicated at 13 is an inlet conduit to the accumulator 10 connected to the tube nest 12a located in the vicinity of the front wall 8; indicated at 14 is an outlet conduit from the accumulator 10, connected to the tube nest 12n at a location close to the rear wall 9. The tube nests 12a, 12b-12n are also connected, serially in pairs, by a plurality of side headers 15.

The conduits 13 and 14, the headers 15, and the tube nests 12 are parts of a hydraulic circuit 16 operative to cool the interior of the body 2 by flowing therethrough a heat transfer fluid consisting of an aqueous solution whose freezing point is below -40°C.

The inlet conduit 13 and outlet conduit 14 are in communication with respective conduits 17 and 18 incorporating respective cut-off valve means 19 and 20. Said conduits 17 and 18 are arranged for connection to a conventional refrigerating apparatus, not shown, for freezing the aqueous solution within the cold accumulator 10.

The circuit 16 further comprises a delivery conduit 21 and a return conduit 22, respectively connected to the outlet conduit 14 and the inlet conduit 13, which extend across the body 2 at the roof 5 and the side wall 7.

Provided on the delivery conduit 21 is a motive means 23 for circulating the heat transfer fluid through the hydraulic circuit 16.

The refrigerated transportation unit 1 further comprises a plurality of heat exchangers, preferably consisting of finned banks 24, in heat transfer relationship with the interior of the body 2 and laid in substantially aligned endwise relationship across the roof 5 of the body and being in fluid communication with the delivery 21 and return 22 conduits. Specifically, the finned banks 24 are connected to said conduits, in parallel to one another, downstream from the motive means 23 relatively to the direction of the heat transfer fluid flow through the hydraulic circuit 16.

Advantageously, the hydraulic circuit 16 includes means 25 of mixing and re-circulating the heat transfer fluid in the delivery conduit 21, which means locate downstream from the cold accumulator 10 and upstream of said motive means 23 to regulate the temperature of the heat transfer fluid flowing through the finned banks 24, as explained hereinafter.

The means 25 comprise a by-pass conduit 26 between the delivery conduit 21 and the return conduit 22, and a fine adjustment three-way valve 27 on the delivery conduit 21 at the location of the by-pass conduit 26. In particular, defined within the three-way valve 27 are an inlet 27a from the delivery conduit 21, a second inlet 27b from the by-pass conduit 26, and an outlet 27c to the delivery conduit 21.

Close against the roof 5, at the location of each finned bank 24, there are mounted a pair of fans 28 having respective suction ports facing the bank itself.

Advantageously, both the finned banks 24 and the fans 28 are housed within a compartment 29 defined between the roof 5 and a false ceiling 30, at a short spacing therefrom. Formed through the false ceiling 30 are suction openings 31 and delivery openings 32, located respectively in the vicinities of the side walls 7 and 6, to enable the fans 28 to draw an air flow from the body 2 through the suction openings 31, force said air flow through the passages between the fins on the finned banks 24, and re-direct it at a low speed into the body through the delivery openings 32.

It matters to observe that each finned bank 24 and its respective pair of fans 28 constitute an independent cooling device which generates, inside the body 2, a re-circulating flow of cooled air directed substantially along a spiral path transversely to the body.

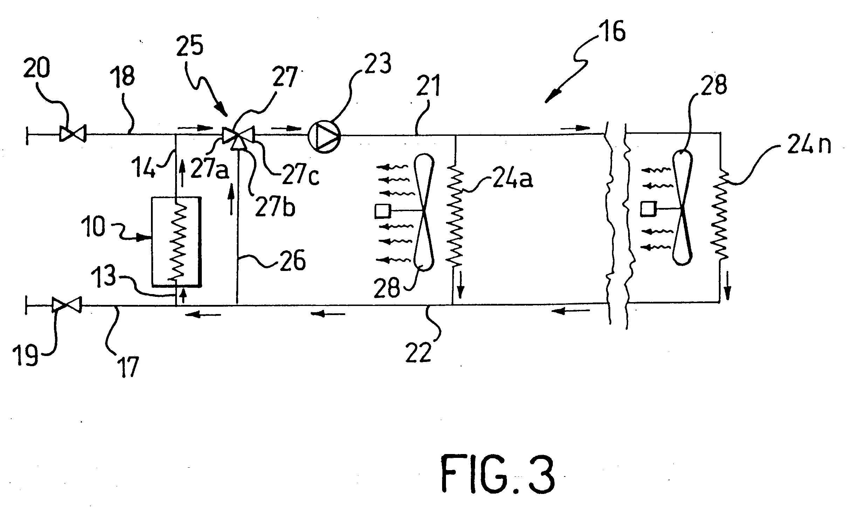

The foodstuff commodities contained in the body 2 of the transportation unit 1 are refrigerated in the manner described herein below with specific reference to the hydraulic circuit 16 shown diagramatically in Figure 3.

Before loading the body 2 with the commodities, or on the loading thereof, the conduits 17 and 18 are connected to a conventional refrigerating apparatus. Thereafter, by opening the valve means 19 and 20 and concurrently shutting off the delivery conduit 21 by closing the inlet 27a of the three-way valve 27, the heat transfer fluid, now cooled through the refrigerating apparatus, will flow through the conduit 17, the inlet conduit 13, and the finned tube nests 12, to a condition of heat transfer with the aqueous solution present in the box-type containers 11, thereby cooling said solution. The heat transfer fluid will then flow through the outlet conduit 14, the conduit 18, and back to the refrigerating apparatus wherein it undergoes further cooling.

When the aqueous solution in the cold accumulator 10 becomes fully frozen, with the solution freezing point placed a few degrees below the lowest temperature to be achieved within the body 2, the conduits 17 and 18 are shut off through the valve means 19 and 20, the motive means 23 is operated, and the inlet 27a and outlet 27c of the three-way valve 27 are concurrently opened to admit heat transfer fluid through the delivery conduit 21. Said fluid will flow through the finned banks 24, and thence through the return conduit 22 and inlet conduit 13 into the cold accumulator 10.

At the same time, the fans 28 will be operated to establish, inside the body 2, full and continued re-circulation at a low speed, of air cooled by the finned banks 24.

It matters to observe that, by keeping the outlet 27c open and acting instead on the inlets 27a and 27b, the fine adjustment three-way valve 27 can enter any of multiple operating conditions within a substantially continuous range between the following limit conditions:
- inlet 27a (from accumulator 10) open and inlet 27b (from by-pass conduit 26) closed. In this first limit condition, all the heat transfer fluid that reaches the finned banks 24 will come directly from the cold accumulator 10 and be, therefore, at a temperature close to that of the aqueous solution frozen within the accumulator;
- inlet 27a closed and inlet 27b open. Under this second limit condition the accumulator 10 is substantially cut off, and the heat transfer fluid will only flow through the loop formed by the delivery conduit 21, banks 24, return conduit 22, and by-pass conduit 26, thereby it undergoes progressive heating.

Each intermediate condition of the valve 27 to the aforesaid limit conditions will require a different mixing ratio of the (colder) heat transfer fluid from the accumulator 10 to the (warmer) heat transfer fluid from the by-pass conduit 26.

Thus, it becomes possible to control with great accuracy, to within ± 0.5°C, the temperature of the heat transfer fluid flowing through the finned banks 24 and, hence, the temperature inside the body.

To this aim, the three-way valve 27 is advantageously driven by a plurality of temperature sensors, known per se and not shown, which are provided within the body 2 and calibrated to suit a specific kind of foodstuff commodities to be refrigerated.

The high accuracy of temperature control also affords control on the moisture content of the air inside the body. In fact, with the difference between the temperature of the heat transfer fluid flowing through the finned banks and the body inside temperature held within limited values, no condensation water or frost will form over the banks. As a result, de-humidification of the air within the body can be avoided, which is of special benefit where fresh fruit and vegetable produce should be carried.

The refrigerated transportation unit of this invention, consisting of a semi-trailer in the embodiment described, or in quite an equivalent manner of a freight car or a container, has proved highly reliable and suited to carry foodstuffs and the like perishable commodities of various description. In fact, on account of the controlled relative humidity and of the enclosure inside temperature being accurately adjustable within the range of -25°C to +12°C, optimum preservation is ensured for both deep-frozen products and fresh fruit and vegetable produce, with a shelf-life which may be 3-4 times longer than that to be achieved with conventional refrigerated transportation units.

It matters to observe in this respect that, by virtue of the finned banks being laid across the body and of the respective low-speed fans provided, uniform temperature distribution can be ensured throughout the body interior.

In addition, by an adequate sizing of the cold accumulator and the amount of aqueous solution contained therein, long endurance features can be achieved.

A further major advantage afforded by the transportation unit of this invention is that running and maintenance costs can be kept low, and that no highly polluting fluids are employed, such as the chlorofluorocarbides commonly used in refrigerating apparatus.

## Claims

1. A refrigerated transportation unit for foodstuffs and the like perishable commodities, comprising a box-like body (2) wherein such commodities are loaded a cold accumulator (10) installed on the body (2), characterized in that it comprises a hydraulic circuit (16) extending partway through the cold accumulator (10) and wherethrough a thermal transfer fluid is flown in thermal transfer relationship with the cold accumulator (10), said hydraulic circuit (16) including a motive means (23) for circulating the fluid, a delivery conduit (21) and a return conduit (22) extending across said body (2), fluid mixing and re-circulating means (25) in the delivery conduit (21), and a plurality of heat exchangers (24) supported within said body (2) in communication with the delivery (21) and return (22) conduits for refrigerating the inside of the body (2), the cold accumulator (10) comprises box-type containing means (11) enclosed in the wall structure of said body (2) and containing a low freezing point aqueous solution in which there are submerged thermal exchange conduit nests (12) of the hydraulic circuit (16).

2. A refrigerated transportation unit according to claim 1, wherein said box-type containing means are a plurality of box-type containers (11) laid side-by-side.

3. A refrigerated transportation unit according to claim 2, wherein said hydraulic circuit (16) comprises a plurality of finned tube nests (12) connected in series to one another, extending each through a respective box-type container (11), and being submerged in said aqueous solution.

4. A refrigerated transportation unit according to any of the preceding claims, wherein said cold accumulator (10) is housed within a thermally insulated compartment (2a) provided in said body (2).

5. A refrigerated transportation unit according to claim 4, wherein said thermally insulated compartment (2a) is provided beneath the floor (4) of said body (2).

6. A refrigerated transportation unit according to any of the preceding claims, wherein said heat exchangers comprise finned banks (24) laid substantially aligned across said body (2) and connected in parallel with one another.

7. A refrigerated transportation unit according to claim 6, wherein a plurality of fans (28) are provided, mounted in said body (2) at the locations of said finned banks (24).

8. A refrigerated transportation unit according to claim 7, wherein said finned banks (24) and said fans (28) are provided within a compartment (29) at the roof (5) of said body (2).

9. A refrigerated transportation unit according to claim 8, wherein said compartment (29) is defined between the roof (5) and a false ceiling (30).

10. A refrigerated transportation unit according to any of the preceding claims, wherein said mixing and re-circulating means (25) comprise a by-pass conduit (26) between the delivery conduit (21) and the return conduit (22) and a fine adjustment three way valve (27) on the delivery conduit (21) at the by-pass conduit (26), for adjusting the flow of the thermal transfer fluid from the accumulator (10) and from the by-pass conduit (26) to the delivery conduit (21).

## Patentansprüche

1. Eine Kühltransporteinheit für Lebensmittel und ähnlich verderbliche Artikel, die einen kistenähnlichen Körper (2), in den derartige Artikel geladen werden, und einen Kälteakkumulator (10) aufweist, der in den Körper (2) eingebaut ist, dadurch gekennzeichnet, daß sie folgende Merkmale aufweist: eine hydraulische Schaltung (16), die sich teilweise durch den Kälteakkumulator (10) erstreckt, und durch die ein thermisches Übertragungsfluid, das in thermischer Übertragungsbeziehung zu dem Kälteakkumulator (10) steht, fließt, wobei die hydraulische Schaltung (16) eine motorische Einrichtung (23) zum Zirkulieren des Fluids einschließt, einen Zuführkanal (21) und einen Rückführkanal (22), die sich durch den Körper (2) erstrecken, eine Fluid-Misch- und -Rezirkulations-Einrichtung (25) im Zuführkanal (21) und eine Mehrzahl von Wärmetauschern (24), die in Verbindung mit dem Zuführ- und Rückführ-Kanal (21; 22) zum Kühlen des Inneren des Körpers (2) vorgesehen sind, wobei der Kälteakkumulator (10) eine kistenartige Aufnahmeeinrichtung (11) umfaßt, die in der Wandstruktur des Körpers (2) eingeschlossen ist, und die eine wäßrige Lösung mit einem tiefen Gefrierpunkt aufweist, in die Thermalaustausch-Kanalvorrichtungen (12) der hydraulischen Schaltung (16) eingetaucht sind.

2. Eine Kühltransporteinheit gemäß Anspruch 1, bei der die kistenartige Aufnahmeeinrichtung aus einer Mehrzahl von kistenartigen Containern (11), die Seite an Seite liegen, besteht.

3. Eine Kühltransporteinheit gemäß Anspruch 2, bei der die Hydraulikschaltung (16) eine Mehrzahl von gerippten Rohrvorrichtungen (12) aufweist, die seriell miteinander verbunden sind, wobei jede sich durch einen jeweiligen kistenartigen Container (11) erstreckt und in die wäßrige Lösung eingetaucht ist.

4. Eine Kühltransporteinheit gemäß einem beliebigen vorhergehenden Anspruch, bei dem der Kälteakkumulator (10) in ein thermisch isoliertes Abteil (2a), das in dem Körper (2) vorgesehen ist, gehäust ist.

5. Eine Kühltransporteinheit gemäß Anspruch 4, bei dem das thermisch isolierte Abteil (2a) unterhalb des Bodens (4) des Körpers (2) vorgesehen ist.

6. Eine Kühltransporteinheit gemäß einem beliebigen vorhergehenden Anspruch, bei dem die Wärmetauscher gerippte Bänke (24) aufweisen, die im wesentlichen über dem Körper (2) angeordnet liegen und parallel miteinander verbunden sind.

7. Eine Kühltransporteinheit gemäß Anspruch 6, bei der eine Mehrzahl von Lüftern (28) vorgesehen sind, die in dem Körper (2) an den Orten der gerippten Bänke (24) befestigt sind.

8. Eine Kühltransporteinheit gemäß Anspruch 7, bei der die gerippten Bänke (24) und die Lüfter (28) in einem Abteil (29) am Dach (5) des Körpers (2) vorgesehen sind.

9. Eine Kühltransporteinheit gemäß Anspruch 8, bei der die Abteilung (29) zwischen dem Dach (5) und einer unechten Decke (30) festgelegt ist.

10. Eine Kühltransporteinheit gemäß einem beliebigen vorhergehenden Anspruch, bei der die Misch- und Rezirkulations-Einrichtung (25) einen Bypass-Kanal (26) zwischen dem Zuführkanal (21) und dem Rückführkanal (22) und ein Feineinstellungs-Dreiwegeventil (27) in dem Zuführkanal (21) an dem Bypass-Kanal (26) zum Einstellen des Flusses des thermischen Übertragungsfluids von dem Akkumulator (10) und von dem Bypass-Kanal (26) zu dem Zuführkanal (21) aufweist.

## Revendications

1. Ensemble de transport réfrigéré pour denrées alimentaires et marchandises périssables analogues, comportant un corps (2) analogue à une boite dans lequel de telles marchandises sont chargées, un accumulateur de froid (10) installé sur le corps (2), caractérisé en ce qu'il comporte un circuit hydraulique (16) s'étendant partiellement à travers l'accumulateur de froid (10) et à travers lequel s'écoule un fluide de transfert thermique en relation de transfert thermique avec l'accumulateur de froid (10), ledit circuit hydraulique (16) comportant des moyens propulseurs (23) destinés à mettre en circulation le fluide, un conduit d'alimentation (21) et un conduit de retour (22) s'étendant à travers ledit corps (2), des moyens (25) de mélange et de remise en circulation de fluide situés dans le conduit d'alimentation (21), et plusieurs échangeurs de chaleur (24) supportés à l'intérieur dudit corps (2) communiquant avec les conduits d'alimentation (21) et de retour (22) pour réfrigérer l'intérieur du corps (2), l'accumulateur de froid (10) comporte des moyens (11) formant contenant du type boîte englobés dans la structure formant parois dudit corps (2) et contenant une solution aqueuse à bas point de solidification dans laquelle sont immergés des réseaux (12) de conduits d'échange thermique du circuit hydraulique (16).

2. Ensemble de transport réfrigéré selon la revendication 1, dans lequel lesdits moyens formant contenant du type boîte sont plusieurs conteneurs (11) du type boite agencés côte à côte.

3. Ensemble de transport réfrigéré selon la revendication 2, dans lequel ledit circuit hydraulique (16) est constitué de plusieurs réseaux (12) de tubes munis d'ailettes reliés en série les uns aux autres, s'étendant chacun à travers un conteneur (11) respectif du type boîte, et étant immergés dans ladite solution aqueuse.

4. Ensemble de transport réfrigéré selon l'une quelconque des revendications précédentes, dans lequel ledit accumulateur de froid (10) est reçu à l'intérieur d'un compartiment (2a) isolé thermiquement agencé dans ledit corps (2).

5. Ensemble de transport réfrigéré selon la revendication 4, dans lequel ledit compartiment (2a) isolé thermiquement est agencé en dessous du plancher (4) dudit corps (2).

6. Ensemble de transport réfrigéré selon l'une quelconque des revendications précédentes, dans lequel lesdits échangeurs de chaleur sont constitués de rampes (24) munies d'ailettes agencées à peu près alignées à travers ledit corps (2) et reliées en parallèle l'une à l'autre.

7. Ensemble de transport réfrigéré selon la revendication 6, dans lequel plusieurs ventilateurs (28) sont agencés, montés dans ledit corps (2) au niveau des emplacements desdites rampes (24) munies d'ailettes.

8. Ensemble de transport réfrigéré selon la revendication 7, dans lequel lesdites rampes (24) munies d'ailettes et lesdits ventilateurs (28) sont agencés à l'intérieur d'un compartiment (29) situé au niveau du toit (5) dudit corps (2).

9. Ensemble de transport réfrigéré selon la revendication 8, dans lequel ledit compartiment (29) est défini entre le toit (5) et un faux plafond (30).

10. Ensemble de transport réfrigéré selon l'une quelconque des revendications précédentes, dans lequel lesdits moyens de mélange et de remise en circulation (25) sont constitués d'un conduit de dérivation (26) situé entre le conduit d'alimentation (21) et le conduit de retour (22) et d'une vanne trois voies (27) à réglage fin située sur le conduit d'alimentation (21) au niveau du conduit de dérivation (26) pour régler l'écoulement du fluide de transfert thermique provenant de l'accumulateur (10) et du conduit de dérivation (26) vers le conduit d'alimentation (21).
